# EUROPEAN PATENT SPECIFICATION

(11) **EP 3 121 883 B1**
(45) Date of publication and mention of the grant of the patent: **28.08.2019**
(21) Application number: 15764951.8
(22) Date of filing: 19.03.2015
(51) Int. Cl.: H01M 4/62, H01M 4/131, H01M 4/48

(54) **ELECTRODE FOR NON-AQUEOUS ELECTROLYTE SECONDARY BATTERY**
ELEKTRODE FÜR SEKUNDÄRBATTERIE MIT WASSERFREIEM ELEKTROLYT
ÉLECTRODE POUR UNE BATTERIE RECHARGEABLE À ÉLECTROLYTE NON AQUEUX

(30) Priority: 19.03.2014 JP 2014056639
(43) Date of publication of application: 25.01.2017
(73) Proprietor: Toppan Printing Co., Ltd., Tokyo 110-0016 (JP)
(72) Inventor: KURIHARA, Hitoshi, Tokyo 110-0016 (JP)
(74) Representative: Hoffmann Eitle
(86) International application number: PCT/JP2015/001545
(87) International publication number: WO 2015/141231

(56) References cited:
- WO-A1-2013/175241
- WO-A1-2014/057888
- WO-A1-2014/207967
- WO-A1-2014/207967
- WO-A1-2015/046517
- JP-A- 2013 197 055
- JP-A- 2013 197 055
- JP-A- 2015 069 878

## Description

### [Technical Field]

The present invention relates to an electrode for non-aqueous electrolyte secondary battery.

### [Background]

Li (lithium) ion secondary batteries have been known as secondary batteries capable of repeatedly being charged or discharged. Generally, the Li-ion secondary batteries are categorized as non-aqueous electrolyte secondary batteries.

Some of the above-mentioned Li-ion secondary batteries include a binder in the electrode thereof, for example. For example, PTLs 1 and 2 disclose a technique concerning such a binder.

PTL 1 discloses use of sodium alginate for the above-mentioned binder. PTL 1 also discloses that cycle characteristics of the sodium alginate are better than those of conventionally-used binders such as PVdF (Poly vinylidene diFluoride), CMC (Carboxy Methyl Cellulose) and SBR (Styrene-Butadiene Rubber).

Moreover, PTL 2 discloses that outstanding output properties can be obtained when using sodium alginate, as the above-mentioned binder. Sodium alginate exerts viscosity in a range of 1000 mPa·s to 2000 mPa·s at 20 °C when used in the form of 1% (W/V =weight/volume %) solution.

PTL 3 and PTL 4 are disclosing an electrode for a lithium ion battery having a silicon oxide active material, a sodium alginate binder and a conductive material selected from a list comprising acetylene black and vapour grown carbon fiber.

### [Citation List]

### [Patent Literature]

[PTL 1] WO 2011/140150
[PTL 2] JP-A-2013-161832
[PTL 3] WO 2013/175241 A1
[PTL 4] JP 2013197055 A

### [Summary]

### [Technical Problem]

As described above, in the case where sodium alginate is used as a binder to be contained in the electrode of an Li-ion secondary battery, the cycle characteristics of the Li-ion secondary battery are improved. However, an SEI (Solid Electrolyte Interface (layer)) is continuously produced due to cyclic charge/discharge operations, causing a poor cycling performance.

The present invention is achieved to solve the above-described problem, and an object of the present invention is to provide an electrode for a non-aqueous electrolyte secondary battery capable of improving cycle characteristics.

### [Solution to Problem]

An aspect of the present invention is an electrode of a non-aqueous electrolyte secondary battery characterized in that the electrode includes a conduction aid; and an active material layer containing an active material capable of alloying with Li, in which the conduction aid contains acetylene black and a vapor grown carbon fiber, a mass ratio of the acetylene black is within a range of from 12 mass% to 20 mass% inclusive with respect to a mass of the active material, a mass ratio of the vapor grown carbon fiber is within a range of from 2 mass% to 6 mass% inclusive with respect to a mass of the active material, the active material layer contains a binder selected from the group consisting of a salt of CMC, a salt of polyacrylic acid, a salt of an acrylic acid-maleic acid copolymer and alginate; and the mass ratio of the binder is 18 mass% or more with respect to a mass of the active material.

### [Advantageous Effects of Invention]

According to one aspect of the present invention, there are provided a polycarboxylic acid-coated Si-based active material containing the vapor grown carbon fiber and having high cycle characteristics, and an electrode for a non-aqueous electrolyte secondary battery using the active material,.

### [Brief Description of Drawings]

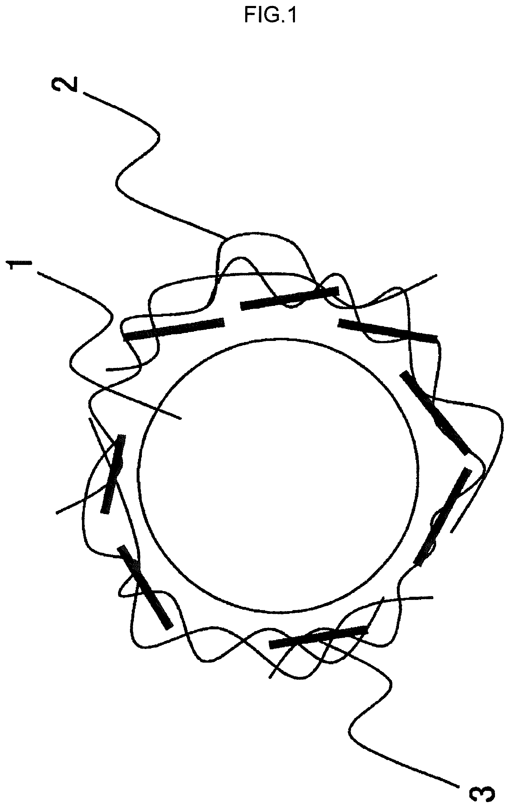

Fig. 1 is a schematic diagram showing a configuration of an active material layer provided in an electrode according to a first embodiment of the present invention.

### [Description of Embodiments]

As a result of a keen research, aiming a further improvement of the cycle characteristics of a non-aqueous electrolyte secondary battery (e.g., Li-ion secondary battery), the inventor of the present invention has discovered that the cycle characteristics can be improved when a vapor grown carbon fiber is contained in a coating layer of sodium alginate covering the surface of an active material.

Hereinafter, with reference to the drawings, an embodiment of the present invention will be described.

### (First Embodiment)

Hereinafter, with reference to the drawings, a first embodiment of the present invention (hereinafter referred to as the present embodiment) will be described. It should be noted that various specific details will be described for complete understanding of the embodiment of the present invention. However, it is apparent that one or more embodiments can be accomplished without the specific details.

### (Configuration of non-aqueous electrolyte secondary battery)

A non-aqueous electrolyte secondary battery is provided with an electrode containing an active material layer (electrode for non-aqueous electrolyte secondary battery).

As shown in Fig. 1, the active material layer contains an active material 1, a conduction aid and a binder 2.

The active material 1 contains MOx. 'x' refers to 1.5 or less, for example. 'M' refers to an active material, i.e., Si, Sn and Zn, capable of forming an alloy with Lithium. Preferably, the active material is Si having 4200 mAh/g capacity.

The smaller the particle size of the SiOx is, the larger the capacity and the cycle maintenance ratio become.

On the other hand, since the SiOx in a particulate is likely to be condensed, graphite may be added to the SiOx electrode. In this case, the SiOx particulate can be prevented from being condensed by the graphite supporting the SiOx particulate thereon.

The conduction aid contains acetylene black and a vapor grown carbon fiber 3. The mass ratio of acetylene black is within a range of from 12 mass% to 20 mass% inclusive with respect to the mass of the active material 1.

This is because, when the mass ratio of acetylene black is higher than 20 mass% with respect to the mass of the active material 1, the total surface area of the particulates in the active material layer is increased so that the amount of the binder necessary for the binding is also increased, thereby lowering the cycle maintenance ratio. Moreover, this is because, when the mass ratio of acetylene black is lower than 12 mass% with respect to the mass of the active material 1, the conductive path is cut off due to a change in volume of the electrode caused by charging/discharging, thereby lowering the cycle maintenance ratio.

The mass ratio of the vapor grown carbon fiber 3 is within a range of from 2 mass% to 6 mass% inclusive with respect to the mass of the active material 1.

This is because, the effect of the vapor grown carbon fiber 3 is insufficient when the mass ratio of the vapor grown carbon fiber 3 is less than 2 mass% with respect to the mass of the active material 1. Moreover, this is because, when the mass ratio of the vapor grown carbon fiber 3 is higher than 6 mass% with respect to the active material 1, the cycle maintenance ratio is lowered similarly to the case where a large amount of acetylene black is added.

The mass ratio of the binder is within a range of from 18 mass% to 21 mass% with respect to the mass of the active material 1.

This is because when the mass ratio of the binder 2 is less than 18 mass% with respect to the mass of the active material 1, the cycle maintenance ratio is lowered. Moreover, this is because, when the mass ratio of the binder is more than 21 % with respect to mass of the active material 1, the capacity per mass of the electrode is lowered.

The binder 2 is a polymer having a carboxyl group, that is, a sault, such as CMC or polyacrylic acid, or an acrylic acid-maleic acid copolymer, or the like. Preferably, the binder 2 is alginate. The alginate has a larger number of carboxyl groups per repeat unit than that of CMC. Hence, in the case where the surface of the SiOx contained in the active material 1 is covered with alginate, a good ion-conductive film can be formed.

Further, when the vapor grown carbon fiber 3 is added to the conduction aid, the coating layer is mechanically reinforced. Therefore, if charging/discharging is repeatedly performed, a coating layer unlikely to cause cracks can be formed.

In other words, the coating layer of sodium alginate covering the surface of the active material 1 is permitted to contain the vapor grown carbon fiber 3. Thus, there can be provided the polycarboxylic acid-coated Si-based active material 1 containing the vapor grown carbon fiber 3, and an electrode for a non-aqueous electrolyte secondary battery that uses the active material 1. Accordingly, there can be provided an electrode for a non-aqueous electrolyte secondary battery capable of improving cycle performance thereof.

A solvent of an electrolytic solution used for the non-aqueous electrolyte secondary battery may include, for example, low-viscosity acyclic carbonate ester such as dimethyl carbonate or diethyl carbonate, or cyclic carbonate ester having high dielectric such as ethylene carbonate, propylene carbonate, butylene carbonate, or γ-butyrolactone, 1,2-dimethoxy ethane, tetrahydrofuran, 2-methyl tetrahydrofran, 1,3-dioxolane, methyl acetate, methyl propionate, vinylene carbonate, dimethyl formamide, sulfolane, or a mixture of these materials.

The electrolyte contained in the electrolytic solution is not particularly limited. For example, usable electrolytes include LiClO₄, LiBF₄, LiAsF₆, LiPF₆, LiCF₃SO₃, LiN(CF₃SO₂)₂, LiI, LiAlCl₄ and the like, and mixtures thereof. Preferably, the electrolyte is a lithium salt obtained by mixing one or two or more of LiBF₄, LiPF₆.

### [Examples]

Hereinafter, the present invention will be described in more detail by way of examples (hereinafter also referred to as the present invention example). However, the present invention is not limited to these examples.

### [Example 1]

24g of acetylene black (AB: Acetylene Black, HS-100 manufactured by Denka Co., Ltd, HS-100) and 41g of NMP were added to 120g of NMP (N-methylpyrrolidone, N-methyl-2-pyrrolidone) solution containing PVdF (#7208 manufactured by Kureha Corporation) and stirred for 10 minutes using HIVIS MIX.

Next, 144g of NCM (nickel·manganese·cobalt ternary-system material manufactured by Nihon Kagaku Sangyo Co., Ltd) and 337g of LMO (Lithium-Manganese Oxide Type-F manufactured by Mitsui Mining & Smelting Co., Ltd) were added thereto, and stirred for 10 minutes. When the ink was confirmed to be in a state of stiff consistency, these compounds were kneaded for another 10 minutes. Thereafter, NMP was added and diluted so as to have NV (solid content ratio) of 60%, thereby obtaining a positive electrode slurry.

Further, the obtained positive slurry was coated onto a collector. As the collector, an aluminum (Al) foil having a thickness of 15 µm was used. The positive slurry was coated by doctor blading such that the coating quantity becomes 18.8 mg/cm². Subsequently, the slurry was dried at 120 °C for 30 minutes, followed by pressing to obtain 2.5 g/cm³ density. As a result, a positive electrode of the present invention was obtained.

Next, 5.39 g of SiO (manufactured by Osaka Titanium Technologies Co., Ltd) with a median size (d50) of 6.6 µm, 2.16 g of graphite (Gr: Graphite, SBR high rate SMG, manufactured by Hitachi Chemical Co., Ltd), 1.07 g of acetylene black, 0.27 g of vapor grown carbon fiber (VGCF) and 1.62 g of sodium alginate (manufactured by Kikkoman Biochemifa Co., Ltd) were added to 49.50 g of water, followed by a pre-dispersion with a disperser (manufactured by SMT Co., Ltd) to produce a mixture liquid. Then, the pre-dispersed mixture liquid was dispersed again as a major dispersion by Filmix (registered trademark, manufactured by Primix Corporation) to obtain negative electrode slurry.

Then, the obtained negative electrode slurry was coated onto a collector which was formed of a copper foil having a thickness of 12 µm. The negative electrode slurry was coated by using doctor blading. The mass loading was 1.32 mg/ cm². Subsequently, the coated slurry was dried at 80°C for 30 minutes, followed by pressing, thereby obtaining a negative electrode of the example 1. The density thereof was 1.2 g/cm³.

### [Example 2]

A positive electrode of the example 2 was produced with similar process to that of the example 1. Hence, only a process for preparing a negative electrode according to the example 2 will be described.

5.48 g of SiO (manufactured by Osaka Titanium Technologies Co., Ltd) with a median size (d50) of 6.6 µm, 2.24 g of graphite (Gr: Graphite, SBR high rate SMG, manufactured by Hitachi Chemical Co., Ltd), 1.08 g of acetylene black (AB), 0.31 g of vapor grown carbon fiber (VGCF) and 1.39 g of sodium alginate (manufactured by Kikkoman Biochemifa Co., Ltd) were added to 49.50 g of water, followed by a pre-dispersion with a disperser (manufactured by SMT Co., Ltd) to produce a mixture liquid. Then, the pre-dispersed mixture liquid was dispersed again as a major dispersion by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by using a doctor blading. The coating quantity was 1.29 mg/ cm². Subsequently, the coated slurry was dried at 80°C for 30 minutes, followed by pressing, thereby obtaining a negative electrode of the example 2. The density thereof was 1.2 g/cm³.

A coin cell was prepared using the electrode obtained with the above-described process and the cycle was evaluated similarly to the example 1.

### [Example 3]

Since a positive electrode according to the example 3 was prepared with a similar process to that of the example 1, only a process to prepare a negative electrode of the example 3 will be described.

5.29 g of SiO (manufactured by Osaka Titanium Technologies Co., Ltd) with a median size (d50) of 6.6 µm, 2.16 g of graphite (Gr: Graphite, SBR high rate SMG, manufactured by Hitachi Chemical Co., Ltd), 1.04 g of acetylene black (AB), 0.30 g of vapor grown carbon fiber (VGCF) and 1.71 g of sodium alginate (manufactured by Kikkoman Biochemifa Co., Ltd) were added to 49.50 g of water, followed by pre-dispersion with a disperser (manufactured by SMT Co., Ltd) to prepre a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.32 mg/ cm². Subsequently, coated slurry was dried at 80°C for 30 minutes, followed by pressing, thereby obtaining a negative electrode of the example 3. The density thereof was 1.2 g/cm³.

A coin cell was prepared using the electrode obtained with the above-described process and the cycle was evaluated similarly to f the example 1.

### [Comparative Example 1]

Since a positive electrode according to the comparative example 1 was prepared with a similar process to that of the present invention example, only a process for preparing a negative electrode of the comparative example 1 will be described.

5.14 g of SiO (manufactured by Osaka Titanium Technologies Co., Ltd) with a median size (d50) of 6.6 µm, 2.07 g of graphite (Gr: Graphite, SBR high rate SMG, manufactured by Hitachi Chemical Co., Ltd), 1.55 g of acetylene black (AB), 0.26 g of vapor grown carbon fiber (VGCF) and 1.55 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.40 mg/ cm². Subsequently, the coated slurry was dried at 80°C for 30 minutes, followed by ressing, thereby obtaining a negative electrode of the comparative example 1. The density thereof was 1.2 g/cm³.

A coin cell was prepared using the electrode obtained with the above-described process and the cycle was evaluated similarly to that of the present invention example.

### [Comparative Example 2]

Since a positive electrode according to the comparative example 2 was prepared with a similar process to the present invention example, only a process for preparing a negative electrode of the comparative example 2 will be described.

5.48 g of SiO (manufactured by Osaka Titanium Technologies Co., Ltd) with a median size (d50) of 6.6 µm, 2.24 g of graphite (Gr: Graphite, SBR high rate SMG, manufactured by Hitachi Chemical Co., Ltd), 0.85 g of acetylene black (AB), 0.31 g of vapor grown carbon fiber (VGCF) and 1.62 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.29 mg/ cm². Subsequently, the coated slurry was dried at 80°C for 30 minutes, followed by pressing, thereby obtaining a negative electrode of the comparative example 2. The density thereof was 1.2 g/cm³.

A coin cell was prepared using the electrode obtained with the above-described process and the cycle was evaluated similar to that of the present invention example.

### [Comparative Example 3]

Since a positive electrode according to the comparative example 3 was prepared with a similar process to the present invention example, only a process for preparing a negative electrode of the comparative example 3 will be described.

5.25 g of SiO (manufactured by Osaka Titanium Technologies Co., Ltd) with a median size (d50) of 6.6 µm, 2.14 g of graphite (Gr: Graphite, SBR high rate SMG, manufactured by Hitachi Chemical Co., Ltd), 1.04 g of acetylene black (AB), 0.52 g of vapor grown carbon fiber (VGCF) and 1.55 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.34 mg/ cm². Subsequently, the coated slurry was dried at 80°C for 30 minutes, followed by pressing, thereby obtaining a negative electrode of the comparative example 3. The density thereof was 1.2 g/cm³.

A coin cell was prepared using the electrode obtained with the above-described process and the cycle was evaluated similar to that of the present invention example.

### [Comparative Example 4]

Since a positive electrode according to the comparative example 4 was prepared with a similar process to the present invention example, only a process for preparing a negative electrode of the comparative example 4 will be described.

5.48 g of SiO (manufactured by Osaka Titanium Technologies Co., Ltd) with a median size (d50) of 6.6 µm, 2.24 g of graphite (Gr: Graphite, SBR high rate SMG, manufactured by Hitachi Chemical Co., Ltd), 1.08 g of acetylene black (AB), 0.08 g of vapor grown carbon fiber (VGCF) and 1.62 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.29 mg/ cm². Subsequently, the coated slurry was dried at 80°C for 30 minutes, followed by pressing, thereby obtaining a negative electrode of the comparative example 4. The density thereof was 1.2 g/cm³.

A coin cell was prepared using the electrode obtained with the above-described process and the cycle was evaluated similar to that of the present invention example.

### [Comparative Example 5]

Since a positive electrode according to the comparative example 5 was prepared with a similar process to the present invention example, only a process for preparing a negative electrode of the comparative example 5 will be described.

5.52 g of SiO (manufactured by Osaka Titanium Technologies Co., Ltd) with a median size (d50) of 6.6 µm, 2.26 g of graphite (Gr: Graphite, SBR high rate SMG, manufactured by Hitachi Chemical Co., Ltd), 1.09 g of acetylene black (AB), 0 g of vapor grown carbon fiber (VGCF) and 1.63 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.29 mg/ cm². Subsequently, the coated slurry was dried at 80°C for 30 minutes, followed by pressing, thereby obtaining a negative electrode of the comparative example 5. The density thereof was 1.2 g/cm³.

A coin cell was prepared using the electrode obtained with the above-described process and the cycle was evaluated similar to that of the present invention example.

### [Comparative Example 6]

Since a positive electrode according to the comparative example 6 was prepared with a similar process to the present invention example, only a process for preparing a negative electrode of the comparative example 6 will be described.

5.36 g of SiO (manufactured by Osaka Titanium Technologies Co., Ltd) with a median size (d50) of 6.6 µm, 2.19 g of graphite (Gr: Graphite, SBR high rate SMG, manufactured by Hitachi Chemical Co., Ltd), 0.30 g of acetylene black (AB), 1.06 g of vapor grown carbon fiber (VGCF) and 1.59 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.29 mg/ cm². Subsequently, the coated slurry was dried at 80°C for 30 minutes, followed by pressing, thereby obtaining a negative electrode of the comparative example 6. The density thereof was 1.2 g/cm³.

A coin cell was prepared using the electrode obtained with the above-described process and the cycle was evaluated similar to that of the present invention example.

### [Comparative Example 7]

Since a positive electrode according to the comparative example 7 was prepared with a similar process to the present invention example, only a process for preparing a negative electrode of the comparative example 7 will be described.

5.65 g of SiO (manufactured by Osaka Titanium Technologies Co., Ltd) with a median size (d50) of 6.6 µm, 2.31 g of graphite (Gr: Graphite, SBR high rate SMG, manufactured by Hitachi Chemical Co., Ltd), 1.11 g of acetylene black (AB), 0.32 g of vapor grown carbon fiber (VGCF) and 1.11 g of sodium alginate (manufactured by Kikkoman Biochemifa Co., Ltd) were added to 49.50 g of water, followed by pre-dispersion with a disperser (manufactured by SMT Co., Ltd) to prepare a mixture liquid. Then, the pre-dispersed mixture liquid was fully dispersed by Filmix (manufactured by Primix Corporation) to obtain a negative electrode slurry.

Then, the obtained negative electrode slurry was coated onto a collector which was formed of a copper foil having a thickness of 12 µm. The negative electrode slurry was coated by doctor blading. The coating quantity was 1.23 mg/ cm². Subsequently, the coated slurry was dried at 80°C for 30 minutes, followed by pressing, thereby obtaining a negative electrode of the comparative example 7. The density thereof was 1.2 g/cm³.

A coin cell was prepared using the electrode obtained with the above-described process and the cycle was evaluated similar to that of the present invention example.

### (Preparation of and evaluation of cell)

A coin cell was prepared using the positive and negative electrodes, as components, obtained by the above-described process. Then, charge/discharge properties were evaluated for the present invention example and the comparative examples 1 to 7.

In evaluating charge/discharge properties, a cycle was evaluated under conditions of charge: 366 mA/g (active material weight), discharge: 1829 mA/g (active material weight), voltage range: 3V to 4.25V, repetitive charge/discharge: 100 times.

The coin cell used was 2032 type. The negative electrode was punched into a disc of 15 mm diameter and the positive electrode was punched into a disc of 13.5 mm diameter, for evaluation. The coin cell included a negative electrode, a positive electrode and a separator (Type 2200, manufactured by Celgard LLC), as a basic configuration. The electrolytic solution was obtained by adding 1 mol of LiPF₆ to a solution in which ethylene carbonate (EC) containing 2 wt% of VC (Vinylene Carbonate) was mixed with diethyl carbonate (DMC) at a ratio of 3:7 (v/v).

The evaluation results of charge/discharge are shown in the following Table 1.

**[Table 1]**

| Sample | SiO | Gr | AB | VGCF | Binder | Pre-cycle capacity (mAh g-1) | Post-cycle capacity (mAh g-1) | Maintenance Ratio (% at 100 cycles) |
|---|---|---|---|---|---|---|---|---|
| Example 1 | 71 | 29 | 14 | 4 | 21 | 675 | 567 | 84 |
| Example 2 | 71 | 29 | 14 | 4 | 18 | 680 | 544 | 80 |
| Example 3 | 71 | 29 | 14 | 4 | 23 | 670 | 556 | 83 |
| Comparison 1 | 71 | 29 | 21 | 4 | 21 | 658 | 428 | 65 |
| Comparison 2 | 71 | 29 | 11 | 4 | 21 | 709 | 468 | 66 |
| Comparison 3 | 71 | 29 | 14 | 7 | 21 | 714 | 528 | 74 |
| Comparison 4 | 71 | 29 | 14 | 1 | 21 | 697 | 488 | 70 |
| Comparison 5 | 71 | 29 | 14 | 0 | 21 | 690 | 469 | 68 |
| Comparison 6 | 71 | 29 | 4 | 14 | 21 | 650 | 455 | 70 |
| Comparison 7 | 71 | 29 | 14 | 4 | 14 | 673 | 417 | 62 |

As shown in Table 1, cycle characteristics of the present invention example were better than the comparative examples 1 and 2. Hence, as in the present invention, it was found to be proper that the mass ratio of the acetylene black was in a range of from 12 mass% to 20 mass% with respect to the mass of the active material 1.

Likewise, the cycle characteristics of the present invention example were better than the comparative examples 3, 4 and 5. Therefore, as in the present invention, it was found that proper a mass ratio of the vapor grown carbon fiber 3 was in a range of from 2 mass % to 6 mass% with respect to the mass of the active material 1.

Further, according to the present invention example, the mass ratio of the binder 2 was better than the comparative example 7. Hence, as in the present invention, it was found that a proper mass ratio of the binder 2 was 18 mass% or more with respect to the mass of the active material 1.

When the mass ratio of the binder 2 was higher than 21 mass % with respect to the mass of the active material 1, the capacity per mass of the electrode was lowered. Hence, it was found that proper mass ratio of the binder 2 was equal to or less than 21 mass% with respect to the mass of the active material 1.

Further, the cycle characteristics of the present invention example were better than those of the comparative example 6. Hence, as in the present invention, in the magnitude relationship of the content between the acetylene black and the vapor grown carbon fiber 3, it was confirmed that the proper content of the acetylene black should be larger than that of the vapor grown carbon fiber 3.

According to the present invention example, the mass ratio of the binder 2 was also better than the comparative example 7. Hence, as in the present invention, it was found that a proper mass ratio of the binder 2 was 18 mass% or more with respect to the mass of the active material 1.

Moreover, as shown in the example 3, the maintenance ratio and the capacity were not improved even when the mass ratio of the binder 2 was 21 mass% or more with respect to the mass of the active material 1. Therefore, it was confirmed that a proper mass ratio of the binder 2 was 21% mass% or less with respect to the mass of the active materiall, considering the capacity per mass of the electrode.

Compared to the comparative examples 1 to 7, it was confirmed that the present invention example had the best cycle characteristics and high coulombic efficiency in all the 100 cycles.

When the electrode surface was observed by SEM (Scanning Electron Microscope) before cyclic operations, as shown in Fig. 1, the surface of the active material 1 was covered with resin (binder 2), and the vapor grown carbon fiber 3 and the resin (binder 2) were in an admixed state. From this result, it is considered that the shape shown in Fig. 1 has minimized continuous production of SEI during cyclic operations, thereby improving the cycle maintenance ratio.

The present invention has been described set forth above with reference to the embodiments. However, the above explanation does not intend to limit the invention.

### (Effects of the present embodiments)

In recent years, as secondary batteries capable of charging or discharging, a Lithium ion secondary batteries are attracting attention to reduce the amount of use of oil and the greenhouse gas, and achieve various energy infrastructures and efficiency thereof. Especially, the Lithium Ion secondary battery electric vehicles are expected to be used for electric vehicles, hybrid electric vehicles and fuel cell vehicles. Since the electric vehicles are required to increase a cruising distance, secondary batteries will be more required to have higher energy density in the future.

Generally, a graphite electrode is used currently for a negative electrode. A theoretical capacity of graphite is 372 mAh/ g. As active materials having a capacity larger than that of the graphite, Si or Sn is attracting attention in recent years. Si has a theoretical capacity of 4200 mAh/ g, and Sn has a theoretical capacity of 990mAh/ g. On the other hand, since Si has 11 times a capacity of that of the graphite, a change in volume caused by lithiation/delithiation also becomes larger. Specifically, the volume thereof increases approximately by a factor of four due to lithium insertion.

Compared to graphite, an electrode containing the active material of high capacity has a concern that a conduction path of the electrode is cut off, or lithium is irreversibly consumed due to continuous SEI growth, for example, caused by a large change in the volume due to charging/discharging. This can be a factor of degrading the cycle characteristics of the battery.
(1) In this respect, an electrode for non-aqueous electrolyte secondary battery according to the present embodiment has an active material layer containing a conduction aid and the active material 1 capable of alloying with Li. The conduction aid contains acetylene black and the vapor grown carbon fiber 3, in which a mass ratio of the acetylene black is set to be within a range of from 12 mass% to 20 mass% with respect to the mass of the active material 1, and the mass ratio of the vapor grown carbon fiber 3 is set to be within a range of from 2 mass% to 6 mass% with respect to the mass of the active material 1. The active material layer contains the binder 2 which is a polymer having a carboxyl group, where the mass ratio of the binder 2 is 18 mass% or more with respect to the mass of the active material 1.
   Hence, the electrode for non-aqueous electrolyte secondary battery according to the present embodiment minimizes the occurrence of cutoff in a conduction path of the electrode caused by a large change in the volume due to charging/discharging. Moreover, being coated with a binder, the coating layer of the active material 1 is reinforced by VGCF so as to obtain a mechanically-stable coating layer. Further, the electrode for non-aqueous electrolyte secondary battery according to the present embodiment can improve the cycle characteristics.
(2) In the electrode of the non-aqueous electrolyte secondary battery according to the present embodiment, the mass ratio of the binder 2 is set to be within 21 mass% or less with respect to the mass of the active material 1. Therefore, the electrode for the non-aqueous electrolyte secondary battery according to the present embodiment reliably avoids decrease of the cycle maintenance ratio and decrease of the capacity per mass of the electrode.
(3) In the electrode of the non-aqueous electrolyte secondary battery according to the present embodiment, the binder 2 is made of alginic acid.
   Therefore, according to the electrode for the non-aqueous electrolyte secondary battery of the present embodiment, the surface of the SiOx contained in the active material 1 can be covered with alginic acid so that a good ion conductive film can be formed.
(4) According to the present embodiment, the electrode of the non-aqueous electrolyte secondary battery contains SiOx in the active material 1.

Therefore, according to the electrode for non-aqueous electrolyte secondary battery of the present embodiment, the capacity can be increased, compared to the case where the electrode contains graphite.

### [Industrial Applicability]

The electrode for the non-aqueous electrolyte secondary battery according to the present invention can be used for power supply units of various portable electronic devices, batteries for driving electric vehicles or the like requiring high energy density, storage units for various energy such as solar energy and wind power generated energy, or storage units used for home electrical appliances.

### [Reference Signs List]

- 1:: active material
- 2:: binder
- 3:: vapor grown carbon fiber

## Claims

1. An electrode for a non-aqueous electrolyte secondary battery **characterized in that** the electrode comprises:
a conduction aid; and
an active material layer containing an active material capable of alloying with Li, wherein
the conduction aid contains acetylene black and a vapor grown carbon fiber;
a mass ratio of the acetylene black is within a range of from 12 mass% to 20 mass% inclusive with respect to a mass of the active material;
a mass ratio of the vapor grown carbon fiber is within a range of from 2 mass% to 6 mass% inclusive with respect to a mass of the active material;
the active material layer contains a binder selected from the group consisting of a salt of CMC, a salt of polyacrylic acid, a salt of an acrylic acid-maleic acid copolymer and alginate; and
the mass ratio of the binder is 18 mass% or more with respect to a mass of the active material.

2. The electrode of a non-aqueous electrolyte secondary battery according to claim 1, **characterized in that** the mass ratio of the binder is 21 mass% or less with respect to a mass of the active material.

3. The electrode of a non-aqueous electrolyte secondary battery according to either claim 1 or 2, **characterized in that** the binder is made of alginate.

4. The electrode of a non-aqueous electrolyte secondary battery according to any one of claims 1 to 3, **characterized in that** the active material contains an SiOx.

## Patentansprüche

1. Elektrode für eine Sekundärbatterie mit wasserfreiem Elektrolyten, **dadurch gekennzeichnet, dass** die Elektrode folgendes umfasst:
eine Leitfähigkeitshilfe; und
eine Aktivmaterialschicht, die ein Aktivmaterial enthält, welches mit Li legiert werden kann, wobei
die Leitfähigkeitshilfe Acetylenruß und eine dampfphasengezüchtete Kohlenstofffaser enthält;
das Massenverhältnis des Acetylenrußes im Bereich von 12 Massen-% bis einschließlich 20 Massen-% bezogen auf die Masse des Aktivmaterials liegt;
das Massenverhältnis der dampfphasengezüchteten Kohlenstofffaser im Bereich von 2 Massen-% bis einschließlich 6 Massen-% bezogen auf die Masse des Aktivmaterials liegt;
das Aktivmaterial ein Bindemittel, ausgewählt aus der Gruppe bestehend aus einem CMC-Salz, einem Polyacrylsäuresalz, einem Acrylsäure-Maleinsäure-CopolymerSalz und Alginat, enthält; und
das Massenverhältnis des Bindemittels 18 Massen-% oder mehr bezogen auf die Masse des Aktivmaterials beträgt.

2. Elektrode für eine Sekundärbatterie mit wasserfreiem Elektrolyten gemäß Anspruch 1, **dadurch gekennzeichnet, dass** das Massenverhältnis des Bindemittels 21 Massen-% oder weniger bezogen auf die Masse des Aktivmaterials beträgt.

3. Elektrode für eine Sekundärbatterie mit wasserfreiem Elektrolyten gemäß Anspruch 1 oder 2, **dadurch gekennzeichnet, dass** das Bindemittel aus Alginat hergestellt ist.

4. Elektrode für eine Sekundärbatterie mit wasserfreiem Elektrolyten gemäß mindestens einem der Ansprüche 1 bis 3, **dadurch gekennzeichnet, dass** das Aktivmaterial ein SiOx enthält.

## Revendications

1. Électrode pour batterie secondaire à électrolyte non aqueux, **caractérisée en ce que** l'électrode comprend :
un auxiliaire de conduction ; et
une couche de matériau actif contenant un matériau actif capable de s'allier à Li, dans laquelle
l'auxiliaire de conduction contient du noir d'acétylène et une fibre de carbone formée en phase vapeur;
un rapport massique du noir d'acétylène est dans une plage de 12 % en masse à 20 % en masse inclus par rapport à une masse du matériau actif ;
un rapport massique de la fibre de carbone formée en phase vapeur est dans une plage de 2 % en masse à 6 % en masse inclus par rapport à une masse du matériau actif ;
la couche de matériau actif contient un liant choisi dans le groupe constitué d'un sel de CMC, d'un sel d'acide polyacrylique, d'un sel d'un copolymère d'acide acrylique et d'acide maléique et d'un alginate ; et
le rapport massique du liant est égal ou supérieur à 18 % en masse par rapport à une masse du matériau actif.

2. Électrode de batterie secondaire à électrolyte non aqueux selon la revendication 1, **caractérisée en ce que** le rapport massique du liant est de 21 % en masse ou moins par rapport à une masse du matériau actif.

3. Électrode de batterie secondaire à électrolyte non aqueux selon la revendication 1 ou 2, **caractérisée en ce que** le liant est en alginate.

4. Électrode de batterie secondaire à électrolyte non aqueux selon l'une quelconque des revendications 1 à 3, **caractérisée en ce que** le matériau actif contient un SiOx.
